# EUROPEAN PATENT APPLICATION

(11) **EP 2 019 525 A2**
(43) Date of publication of application: **28.01.2009**
(21) Application number: 08159032.5
(22) Date of filing: 25.06.2008
(51) Int. Cl.: H04L 12/56, H04B 1/38

(54) **Electronics card communication**

(30) Priority: 25.07.2007 GB 0714472
(71) Applicant: Vetco Gray Controls Limited, Bristol BS48 1BS (GB)
(72) Inventor: Davis, Julian, Frampton Cotterell, Somerset BS36 2LD (GB); Kent, Ian, Nailsea, Bristol BS48 2BH (GB); Dalziel, Robert, Highbridge, Somerset (GB)
(74) Representative: Newstead, Michael John

(57) **Abstract**

An electronics card for an electronics module comprises a wireless transceiver for communication with a second wireless transceiver external to the card. In addition, an electronics module comprises such an electronics card.

## Description

This invention relates to an electronics card for an electronics module, and an electronics module comprising such a card.

The control of a subsea fluid extraction well is normally effected by a subsea electronic control module (SEM), housed within, or located close to, a subsea control module (SCM), which in turn is mounted on a tree situated on the sea bed at the well head. The SEM is provided with electric power and communications via an umbilical to the control platform, which may be on a vessel or located on land. Typically, the SEM receives commands via the umbilical communication line to its internal electronics. This results in electrical outputs to electrically-operated production fluid control valves and / or directional control valves (DCVs) housed in the SCM which control hydraulic power to hydraulically-operated valves. The SEM also feeds data relating to such operations back to the control platform. Additionally, the SEM electronics handles many other functions, which include the collection and interpretation of data from sensors distributed throughout the production system, such as pressure, temperature, fluid flow, microseismic, oil / water quality and, on more recent systems, compressed video and transmits them back to the control platform. The SEM also houses the electronics required to operate a High Integrity Pipeline Protection System (HIPPS) and the electronics for the communication system, such as modems and routers, or in more modem systems, Ethernet interfaces, as well as communication redundancy.

The internal electronics of existing SEMs typically consists of dedicated circuitry to effect the functions described above. More recent development has replaced the dedicated electronics with printed circuit cards designed around a modular approach, thus allowing tailoring, configuring and expansion to suit individual project needs. In particular, this helps to minimise recurring engineering effort for new project configurations.

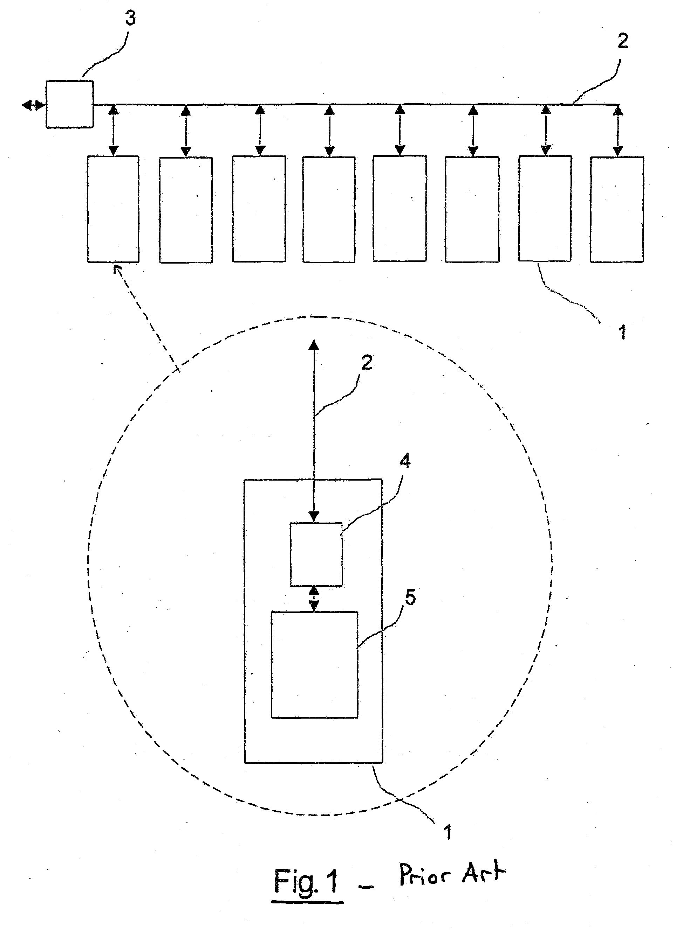

Fig. 1 is a block diagram of a typical existing SEM, showing eight electronics cards 1 mounted in respective slots and connected to each other by a communication bus 2 and externally via a modem 3. The enlarged view of a card shows a processor 4 mounted on each card, which performs the dual function of handling the communication bus and the control and monitoring functions of the core electronics 5.

Such an SEM comprises a printed wiring backplane forming a card rack, with each card 1 carrying a communication device to provide communication both between cards and externally to the SCM. This communication system between the cards 1 is effected via a serial bus 2 on the backplane, this being connected to all the cards 1. Since the bus 2 involves a substantial number of connector pins, this area of the SEM is considered to be prone to failure. It would be preferable therefore to implement a new communications system between cards, which could either be used as the primary communications means, or as a back-up to the existing system. With any such communications system, it would also be preferable to provide the ability to fit any card in any slot without having to readdress the slot location or backplane structure, topology or routing.

It is an aim of the present invention to provide a means of communication between the cards, without the risks and costs involved in having a large number of connections.

This aim is achieved by adding a short-range, high-frequency, wireless transceiver, such as Bluetooth (RTM), to the or each electronics card of the internal electronics of an electronics module, such as a SEM, thus enabling communication between the cards. Such wireless transceivers are currently easily available commercially and are relatively cheap as they are manufactured in large quantities, mainly for the mobile phone 'hands- free' market. Such technologies provide additional benefits of low power consumption and low transmitted power over the relatively short ranges involved.

In accordance with a first aspect of the present invention there is provided an electronics card as set out in the associated claims.

In accordance with a second aspect of the present invention there is provided an electronics module as set out in the associated claims.

The present invention may thus be used to provide a back-up to the communication bus between the cards of a SEM without the involvement of a multiplicity of connector pins. As an alternative, the invention may be used to replace the bus communication system.

The invention will now be described, by way of example, with reference to the accompanying drawings, in which:-
Fig. 1 schematically shows a typical arrangement of a known SEM; and
Fig. 2 schematically shows an SEM in accordance with the present invention.

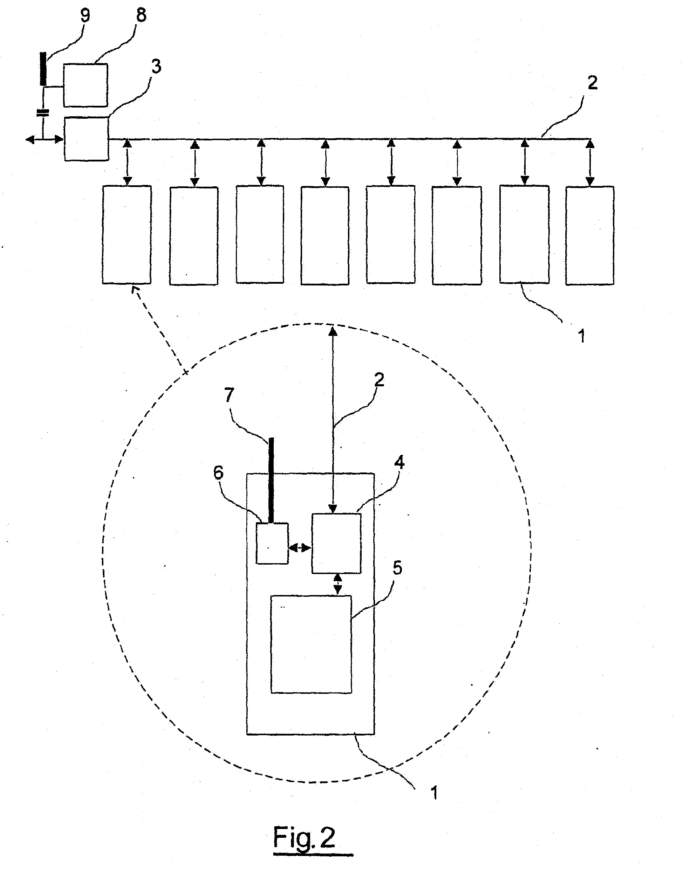

A block diagram of a SEM in accordance with the present invention is shown in Fig. 2, in which components common with the SEM shown in Fig. 1 retain the same reference numerals. In this embodiment, the processor 4 now performs an additional function to that of the conventional SEM, namely the controlling and switching of data to and from a Bluetooth (RTM) configured wireless transceiver 6. This transceiver is able to communicate with respective wireless transceivers on the other cards via a small antenna 7, this being incorporated on the backplane (not shown) that carries the bus 2.

An additional transceiver 8 is mounted on the backplane of the SEM, which is convenient for providing it with electric power. Its antenna 9 both radiates and receives communication with the transceivers on the cards 6 and is coupled, in this instance capacitively, to the external wires of the modem 3. This antenna may further be used to provide communication with apparatus external to the SEM.

The electronics of an SEM is typically housed in a sealed metal container which will function as a screened compartment, thus preventing the radiation from each transceiver from disturbing any external electronics.

The above-described embodiment is exemplary only, and many alternatives are possible within the scope of the claims.

In particular, while the invention has been described with reference to a subsea electronics module for a well installation, the invention is equally applicable to any other electronics modules which includes electronics cards and requires communication therebetween.

As noted above, the communications system in accordance with the invention may be used as the primary communication method, i.e. replacing the bus connection system. In this case, back-up may be provided by fitting dual transceivers at each card.

While Bluetooth (RTM) has been explicitly mentioned as a possible communications technology for use with the present invention, any other wireless communication system or protocol may be employed, as long as it is capable of providing a sufficient data transfer rate for the application in hand.

## Claims

1. An electronics card for an electronics module, comprising a wireless transceiver for communication with a second wireless transceiver external to the card.

2. An electronics card according to claim 1, wherein the wireless transceiver is Bluetooth (RTM) configured.

3. An electronics module comprising an electronics card according to any preceding claim.

4. An electronics module according to claim 3, comprising a plurality of electronics cards according to either of claims 1 and 2.

5. An electronics module according to claim 4, wherein the plurality of cards are connected via a bus for enabling communication between respective cards.

6. An electronics module according to any of claims 3 to 5, further comprising a modem and a wireless transceiver associated with the modem, the modem transceiver arranged for wireless communication with a wireless transceiver associated with an electronics card.

7. An electronics module according to any of claims 3 to 6, wherein the module is a subsea electronics module for a well installation.
